Europäisches Patentamt

European Patent Office

Office européen des brevets

(19)

(11) Numéro de publication : **0 642 150 A1**

# (12) DEMANDE DE BREVET EUROPEEN

(21) Numéro de dépôt : **94401954.6**

(22) Date de dépôt : **02.09.94**

(51) Int. Cl.$^6$ : **H01J 29/89**, G02F 1/13

(30) Priorité : **07.09.93 FR 9310619**

(43) Date de publication de la demande :
**08.03.95 Bulletin 95/10**

(84) Etats contractants désignés :
**DE GB NL**

(71) Demandeur : **SEXTANT AVIONIQUE**
**5,7, rue Jeanne Braconnier**
**Parc Tertiaire**
**F-92360 Meudon-la-Forêt (FR)**

(72) Inventeur : **Barbier, Bruno**
**THOMSON-CSF,**
**SCPI,**
**B.P. 329**
**F-92402 Courbevoie Cedex (FR)**

Inventeur : **Ebert, Jean-Claude**
**THOMSON-CSF,**
**SCPI,**
**B.P. 329**
**F-92402 Courbevoie Cedex (FR)**
Inventeur : **Lack, Patrick**
**THOMSON-CSF,**
**SCPI,**
**B.P. 329**
**F-92402 Courbevoie Cedex (FR)**
Inventeur : **Migozzi, Jean-Blaise**
**THOMSON-CSF,**
**SCPI,**
**B.P. 329**
**F-92402 Courbevoie Cedex (FR)**

(74) Mandataire : **Chaverneff, Vladimir et al**
**THOMSON-CSF**
**SCPI**
**B.P. 329**
**50, rue Jean-Pierre Timbaud**
**F-92402 Courbevoie Cédex (FR)**

(54) **Dispositif de visualisation à couleurs optimisées.**

(57)    Le dispositif de l'invention comporte une source d'images (2) blanches, une matrice à cristaux liquides (5) pour la commande de la teinte, et une matrice à cristaux liquides (6) pour la commande de la saturation des images visualisées. Un premier mode de réalisation est caractérisé par le fait qu'il comporte, en cascade, un dispositif de commande de la luminance des images visualisées (2,10-11), un dispositif de commande de la teinte de ces images (5), et un dispositif de commande de la saturation de ces images (6).

FIG.1

EP 0 642 150 A1

La présente invention se rapporte à un dispositif de visualisation à couleurs optimisées.

L'aspect visuel de tout point d'une image couleur est entièrement défini par trois paramètres indépendants: la luminance, la teinte et la saturation, ces deux derniers paramètres représentant la couleur du point considéré. Les performances de la vision humaine relatives aux variations de luminance sont très différentes de celles relatives aux variations spatiales et temporelles de la couleur.

Les systèmes classiques de visualisation ne permettent pas de commander séparément la luminance et la couleur, et par conséquent exploitent mal la différence de perception entre luminance et couleur.

Pour synthétiser une image en couleurs, il existe deux méthodes : la méthode dite additive et la méthode dite soustractive.

Les systèmes mettant en oeuvre la méthode additive effectuent la modulation des niveaux respectifs de puissance lumineuse de trois rayonnements distincts de couleur fixe, et les mélangent. Ces trois couleurs distinctes sont appelées couleurs primaires, et sont par exemple le rouge, le vert et le bleu. Plusieurs techniques de prise en compte des couleurs des éléments voisins dans des images sont connues pour réaliser le mélange additif: moyenne spatiale d'éléments juxtaposés, moyenne temporelle, superposition spatiale.

On commande l'aspect visuel de chaque élément d'image en modifiant les niveaux lumineux de chacun des trois rayonnements lumineux primaires. Les valeurs relatives de ces trois niveaux lumineux primaires donnent la couleur de chaque élément d'image. La somme de ces trois niveaux donne la luminance de chaque élément d'image. Pour modifier seulement la luminance d'un élément d'image sans modifier sa couleur, il faut modifier le niveau lumineux des trois rayonnements primaires qui le composent. De même, pour modifier seulement la couleur, sans modifier la luminance, il faut modifier le niveau lumineux de ces trois rayonnements primaires.

Dans les systèmes mettant en oeuvre la synthèse soustractive, les trois paramètres modulés sont les niveaux de transmission respectifs de trois filtres passe-bande de couleur fixe traversés successivement par un rayonnement originellement blanc. Ces trois couleurs distinctes sont, par exemple, les couleurs complémentaires des trois couleurs primaires précitées, c'est-à-dire le cyan, le magenta et le jaune.

On commande l'aspect visuel de chaque élément d'image en modifiant le niveau de transmission de chacun des trois filtres. Pour modifier seulement la luminance d'un élément d'image sans modifier sa couleur, il faut modifier le niveau de transmission des trois filtres colorés. De même, pour modifier seulement la couleur, sans modifier la luminance, il faut modifier le niveau de transmission des trois filtres colorés. Un autre inconvénient des systèmes à synthèse soustractive est que la valeur maximale de la transmission est limitée par le fait que chaque filtre absorbe toujours au moins une bande spectrale.

La commande des systèmes de synthèse d'images en couleurs, qu'ils soient additifs ou soustractifs, consiste donc à utiliser plusieurs bandes spectrales de positions déterminées sur l'échelle des longueurs d'onde, à les doser dans des proportions variables et à les ajouter ou à les soustraire du rayonnement incident de la source de lumière. Ces systèmes ne permettent pas de commander directement la couleur sans modifier la luminance, ou de commander directement la luminance sans modifier la couleur. Une des conséquences en est que la définition des images en luminance est égale à leur définition en couleurs, c'est-à-dire que pour une image donnée, le nombre maximum d'éléments d'image de luminance quelconque est égal au nombre d'éléments de couleur quelconque, ou bien encore que la fréquence spatiale maximale de modulation de la luminance, à couleur constante, que le système peut reproduire correctement, est égale à la fréquence spatiale maximale de modulation de la couleur, à luminance constante, que le système peut reproduire correctement.

Or, les performances de la vision humaine, en particulier en termes de fréquences spatiales, sont nettement différentes de celles des systèmes connus de synthèse d'images : l'acuité visuelle est bien meilleure en luminance qu'en couleur. Par conséquent, les systèmes connus sont mal adaptés aux performances de la vision humaine.

La présente invention a pour objet un dispositif de visualisation d'images en couleurs qui puisse être adapté optimalement aux performances de la vision humaine, et qui puisse être ajusté à la vision de chaque utilisateur.

Le dispositif de visualisation conforme à l'invention comporte, en cascade, un dispositif de commande de la luminance des images visualisées, un dispositif de commande de la teinte de ces images, et un dispositif de commande de la saturation de ces images.

La présente invention sera mieux comprise à la lecture de la description détaillée de plusieurs exemples de réalisation pris à titre d'exemples non limitatifs et illustrés par le dessin annexé, sur lequel :

- la figure 1 est une vue éclatée et simplifiée d'un premier mode de réalisation de l'invention, à tube cathodique, polariseur et deux dispositifs de commande ;
- la figure 2 est une vue éclatée et simplifiée d'un second mode de réalisation de l'invention, similaire au premier mode de réalisation, mais à polariseur remplacé par un dispositif de commande ;
- la figure 3 est une vue éclatée et simplifiée d'un troisième mode de réalisation de l'invention, similaire au premier, mais dont le tube cathodique a été remplacé par une valve optique matricielle, rétroéclairée par une source lumineuse, et

- la figure 4 est une vue éclatée et simplifiée d'un quatrième mode de réalisation de l'invention, similaire au premier, mais avec des dispositifs optiques de conjugaison.

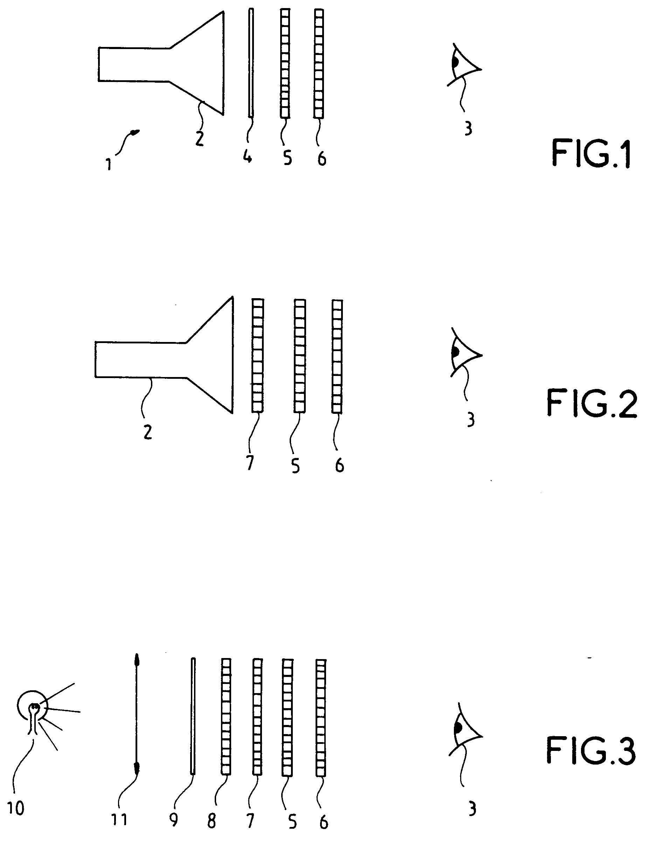

On a représenté en figure 1, de façon très simplifiée, le dispositif 1 de visualisation conforme à l'invention. Ce dispositif comporte, depuis la source d'images 2 jusqu'à l'oeil 3 de l'observateur, un dispositif polariseur 4, un dispositif 5 de commande de teinte et un dispositif 6 de commande de saturation. Le polariseur 4 est par exemple un polariseur linéaire spectralement neutre, mais il pourrait être un polariseur circulaire spectralement neutre. Il faut toutefois noter que l'ordre des dispositifs 4 à 6 n'est pas nécessairement celui indiqué ci-dessus, et qu'ils peuvent être permutés entre eux dans la plupart des modes de réalisation.

La source 2 fournit, de façon connue en soi, une image blanche (à niveaux de gris) polarisée par le polariseur 4. Le dispositif 5 est une valve optique à cristaux liquides qui répartit le rayonnement de la source 2 selon deux axes de polarisation perpendiculaires entre eux et selon deux couleurs complémentaires dont la teinte (longueur d'onde dominante) dépend de la tension de commande appliquée à la valve optique.

Le dispositif 6 est une valve optique à cristaux liquides qui supprime une fraction variable du rayonnement qu'elle reçoit, pour l'un des deux axes de polarisation précités (ou pour un sens de polarisation si le polariseur 4 est à polarisation circulaire).

Ainsi, le dispositif 2 n'agit que sur la luminance, alors que les dispositifs 5 et 6 agissent essentiellement sur la couleur et partiellement sur la luminance: le dispositif 5 agit sur la teinte (ou longueur d'onde dominante) et le dispositif 6 agit sur la saturation.

Ainsi, les éléments 2+4 fournissent une image blanche polarisée en n'agissant que sur sa luminance. L'élément 5 répartit ce rayonnement sur deux axes de polarisation perpendiculaires (x et y) et selon deux couleurs complémentaires dont la teinte (ou longueur d'onde dominante) dépend de la tension de commande de cet élément. L'élément 6 supprime une fraction variable du rayonnement, qu'il reçoit de 2+4 à travers 5, selon un des deux axes de polarisation précités. Les éléments 5 et 6 agissent essentiellement sur la couleur de l'image visualisée, et partiellement sur sa luminance. Dans l'exemple décrit, l'élément 5 agit sur la teinte (ou longueur d'onde dominante), tandis que l'élément 6 agit sur la saturation des images visualisées.

Par conséquent, le dispositif de l'invention permet d'adapter séparément les caractéristiques de chacun des dispositifs électro-optiques 2, 5 et 6 de façon à optimiser l'image formée par le dispositif de visualisation 1 vis-à-vis des caractéristiques de la vision humaine. Cette optimisation consiste à régler séparément pour la luminance, pour la teinte et pour la saturation : le contraste, la définition, le nombre et l'espacement des niveaux de quantification des différents points de l'image visualisée, la fréquence de rafraîchissement et le temps de montée des signaux de commande des paramètres des images.

Le dispositif de l'invention permet, en particulier, d'éviter la "surdéfinition" du paramètre couleur. Ainsi, par exemple pour une image définie de façon classique, sur N lignes de N pixels par ligne, il faut moduler $3N^2$ pixels. On peut très bien, sans altérer de façon perceptible à l'oeil la qualité des images visualisées, diviser par deux, sur chaque axe (lignes et colonnes), la définition de la teinte et la définition de la saturation, ce qui permet de n'avoir à moduler que $1,5N^2$ pixels.

De plus, cette diminution de la définition des valves optiques modulant la teinte et la saturation accroît notablement leur transmission optique et améliore donc le rendement énergétique du dispositif de visualisation.

Le tube cathodique 2 est du type à luminophores blancs, et on forme sur son écran l'image à visualiser. Ce tube cathodique émet une lumière blanche spatialement modulée en intensité. Cette lumière contient les trois couleurs primaires rouge, verte et bleue. Soit $L(\lambda)$ la luminance spectrale de l'un des rayons lumineux émis par ce tube 2.

Le polariseur 4 est par exemple un polariseur linéaire neutre, agissant selon l'axe Y (vertical). Ce polariseur absorbe la moitié de l'énergie lumineuse du tube 2. La luminance spectrale du rayonnement transmis par le polariseur 4 est $0,5\,L(\lambda)$.

La matrice 5 a pour effet de modifier en chacun des points de croisement de son réseau la répartition spectrale d'énergie lumineuse selon les deux axes de polarisation perpendiculaires x et y de la matrice, en fonction du potentiel appliqué à chacun de ces points. La matrice 5 comporte des molécules de cristaux liquides dont on commande individuellement l'orientation par voie électrique, en commandant le potentiel électrique appliqué aux électrodes respectives relatives au point de croisement considéré. L'axe de ces molécules représente l'axe "extraordinaire" de la couche de cristaux liquides.

Pour une énergie lumineuse incidente polarisée (par le polariseur 4) suivant l'axe y, et ayant une luminance de $0,5\,L(\lambda)$, l'énergie lumineuse à la sortie de la matrice 5, selon chaque axe de polarisation, est donnée par :

$$Lx(\lambda) = 0,5\,L(\lambda)\sin^2(k/\lambda)$$
$$Ly(\lambda) = 0,5\,L(\lambda)\cos^2(k/\lambda)$$

avec : $L(\lambda)$ = luminance spectrale émise par le tube cathodique, $\lambda$ = longueur d'onde, $Lx(\lambda)$ : luminance spectrale selon l'axe x, $Ly(\lambda)$ = luminance spectrale selon l'axe y, et $k$ = coefficient qui est fonction du potentiel appliqué sur le pixel considéré de la matrice 5.

Ce phénomène de la modification de la répartition spectrale de l'énergie lumineuse incidente est dû à un cristal liquide nématique, dans lequel l'axe des premières molécules rencontrées par les rayons lumineux pénétrant dans la matrice 5 est situé à 45° de l'axe y (l'axe des molécules suivantes, dans le sens de l'épaisseur, étant à un angle différent de 45°).

Lorsqu'aucun potentiel n'est appliqué, le coefficient k est fonction du produit de l'épaisseur de la cellule de cristaux liquides par la valeur de sa biréfringence. Lorsqu'un potentiel élevé est appliqué à la cellule, l'axe des molécules des cristaux liquides s'aligne sur la direction de propagation de la lumière (axe z). Le plan de polarisation de la lumière est inchangé et correspond à une valeur nulle de k.

Pour des valeurs intermédiaires de potentiels appliqués à la cellule, k prend des valeurs comprises entre zéro et la valeur précitée obtenue sans potentiel.

Du fait que la lumière émise par le tube cathodique 2 est blanche, les couleurs des énergies lumineuses respectivement associées à l'axe de polarisation x et à l'axe de polarisation y, sont complémentaires.

Une matrice telle que la matrice 5 fonctionne selon le principe communément appelé biréfringence électriquement contrôlée.

La matrice 6 à cristaux liquides a pour effet d'analyser la lumière (comme un filtre dit "analyseur") avec un taux de polarisation commandable électriquement. Lorsqu'aucun potentiel n'est appliqué à la matrice 6, l'énergie lumineuse transmise par cette matrice est celle de l'axe de polarisation y. Lorsqu'un potentiel élevé est appliqué à la matrice 6, elle transmet intégralement l'énergie lumineuse, et la teinte de l'image formée par le tube 2 et observée en aval de la matrice 6 est celle du tube 2, c'est-à-dire blanche. Pour des potentiels de valeurs intermédiaires appliqués à la matrice 6, l'énergie lumineuse est entièrement transmise sur l'axe y et partiellement sur l'axe x. Pour cet axe x, l'énergie lumineuse transmise est donnée par la relation :

$$Lt(\lambda) = [a(V).Lx(\lambda)] + Ly(\lambda)$$

relation dans laquelle a(V) est un coefficient de transmission compris entre O et 1, en fonction du potentiel V appliqué à la matrice 6, avec a(0) = 0 et a($\infty$) = 1.

Ainsi, lorsque l'on fait varier le potentiel V, on balaye l'ensemble des couleurs comprises entre le blanc et la couleur associée à l'axe de polarisation y. Ce phénomène peut être expliqué de la façon suivante. Le cristal liquide contient des molécules de colorant, globalement neutres du point de vue spectral, alignées suivant l'axe x et absorbant de l'énergie lumineuse selon cet axe. On modifie le coefficient de transmission des molécules en inclinant leur axe dans le sens de la propagation de la lumière à l'aide du potentiel électrique appliqué à la matrice. Une telle matrice est du type dit "nématique avec colorants" ("guest host" en anglais).

Selon un deuxième exemple de réalisation de l'invention, schématisé en figure 2, on utilise un dispositif comportant, comme celui de la figure 1, un tube cathodique 2 à phosphores blancs, une première matrice 5 et une deuxième matrice 6, mais au lieu du polariseur 4 on utilise une troisième matrice 7. Cette troisième matrice 7 est identique à la matrice 6, c'est-à-dire qu'elle est une matrice à taux de polarisation variable. La transmission de la matrice 5 en lumière dépolarisée est neutre spectralement. Si l'on enlevait la matrice 7 et si l'on commandait la matrice 6 en mode non polarisant (potentiel élevé appliqué à la matrice 6), l'ensemble des matrices 5 et 6 aurait une transmission globale de 100% et un comportement spectral neutre. Donc, avec la matrice 7, commandée à taux de polarisation variable, la transmission de l'énergie lumineuse émise par le tube 1 peut être améliorée par rapport au cas du dispositif de la figure 1, pour un comportement spectral neutre. Dans le cas de deux matrices 7 et 6 identiques et modulées par la même tension V, l'énergie lumineuse Lt transmise par l'ensemble des matrices 7, 5 et 6, en fonction du coefficient de transmission variable de ces matrices, est alors donnée par la relation suivante :

$$Lt(\lambda) = 0,5$$
$$L(\lambda)[(1 + \alpha^2(V))\cos^2(k/\lambda) + 2\alpha^2(V)\sin^2(k/\lambda)]$$

Dans cette relation, le coefficient a(V) est fonction de l'état des deux matrices 7 et 6 à coefficient de transmission variable (le coefficient de transmission est variable puisque l'on fait varier le taux de polarisation). Ce coefficient a(V) varie entre 0 et 1.

Avec ce dispositif de la figure 2, on double la transmission d'énergie lumineuse par rapport au cas de la figure 1, lorsque la couleur des images en aval de la matrice 6 est identique à celle des images produites par le tube cathodique 2 (couleur blanche en général), et on a alors a(V) = 1. Pour ces couleurs peu saturées, on augmente nettement, la transmission globale du dispositif de visualisation du fait que l'énergie issue de la source est récupérée pratiquement totalement sur un des axes de polarisation, et partiellement sur l'autre, selon le degré de saturation des couleurs.

Pour les couleurs saturées, c'est-à-dire celles pour lesquelles a(V) = 0, c'est-à-dire encore celles qui sont les plus éloignées du blanc en ce qui concerne la saturation, la transmission d'énergie lumineuse n'est pas diminuée par rapport au premier exemple.

Pour les couleurs intermédiaires (entre le blanc et la saturation complète), le taux de transmission de l'ensemble des matrices est, par rapport au premier exemple, multiplié par un facteur compris entre 1 et 2, en fonction de la saturation de la couleur visualisée.

Selon l'exemple de réalisation de la figure 3, qui peut comporter l'ensemble de matrices 7, 5, 6, comme représenté sur le dessin, on remplace le tube cathodique par une valve optique matricielle 8 à cristaux liquides spectralement neutres. Cette valve peut par exemple être une matrice à cristaux liquides nématiques en hélice, associée à un polariseur linéaire neutre 9 qui peut la précéder. De préférence, cette matrice 8 est rétro-éclairée par une source 10 en lumière de préférence blanche, avantageusement à travers un collimateur 11.

Du fait que dans l'exemple de réalisation de la figure 3 la source d'images 8 est une valve optique spectralement neutre, on peut complètement inverser l'ordre des éléments, et au lieu d'avoir, dans l'ordre décrit ci-dessus les éléments 10, 11, 9, 8, 7, 5, 6 on peut avoir : 10, 11, 6, 5, 7, 8, 9 (l'élément 9 étant alors le plus proche de l'observateur).

Dans les modes de réalisation décrits ci-dessus, les éléments essentiels du dispositif de visualisation (source d'images, matrices et polariseur, le cas échéant) sont très proches les uns des autres, et peuvent même être collés les uns aux autres.

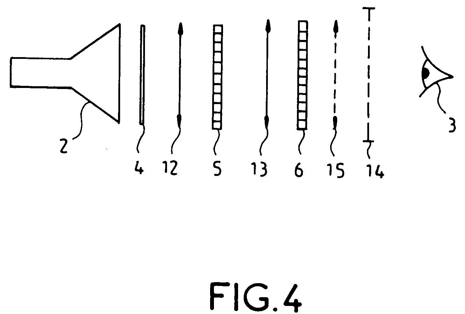

Il est toutefois possible, ainsi que représenté schématiquement en figure 4, de les écarter notablement les uns des autres et de les coupler optiquement à l'aide d'optiques de conjugaison.

Sur l'exemple de la figure 4, on a repris les mêmes éléments qu'en figure 1, à savoir les éléments 2, 4, 5 et 6, l'oeil de l'observateur étant référencé 3. Il est toutefois bien entendu que l'on pourrait également utiliser les éléments des autres modes de réalisation décrits ci-dessus, et inverser l'ordre de ces éléments, ainsi que précisé ci-dessus.

Seuls le polariseur 4 et le tube 2 sont proches l'un de l'autre ou accolés l'un à l'autre. Les éléments 5 et 6 sont espacés entre eux et par rapport au polariseur 4. Une première optique de conjugaison 12 est disposée entre les éléments 4 et 5, et une seconde optique de conjugaison 13 est disposée entre les éléments 5 et 6. L'optique 12 conjugue la source d'images 2 avec la matrice 5, tandis que l'optique 13 conjugue l'élément 5 et l'image de la source 2 avec l'élément 6. Les optiques de conjugaison peuvent être des optiques classiques de conjugaison à grandissement de 1 ou différent de 1 (par exemple des objectifs classiques d'appareils photographiques) ou tout dispositif approprié de transport d'images, par exemple à fibres optiques, ce qui est avantageux par exemple lorsque les différentes matrices doivent être peu éloignées les unes des autres. Bien entendu, on peut supprimer l'une des deux optiques de conjugaison précitées (12 ou 13) si les éléments entre lesquels elle aurait pu être disposée sont très proches l'un de l'autre.

Si la position de l'observateur par rapport au dispositif de visualisation décrit ci-dessus varie peu dans tous les cas d'utilisation, l'observateur peut observer directement l'image produite par ce dispositif.

Par contre, si la position de l'observateur peut varier notablement, on dispose un écran translucide 14 en avant du dispositif décrit ci-dessus, et une optique de conjugaison 15 entre l'élément 6 et l'écran 14 (les éléments 14 et 15 sont représentés en traits interrompus sur la figure 4). Le dispositif de visualisation comportant les éléments supplémentaires 14 et 15 présente en outre l'avantage suivant. L'incidence des rayons lumineux (par rapport à l'écran 14) qui participent à la formation de l'image observée par l'observateur 3 ne varie pas, sur le trajet en aval de l'écran 14, depuis la source 2, lorsque la position de l'observateur par rapport à l'écran 14 varie. On supprime ainsi tout désalignement (erreur de parallaxe) entre les pixels correspondants de chacun des éléments 2, 5 et 6 lorsque la position de l'observateur varie (étant bien entendu que les éléments 2, 5 et 6 sont bien alignés et que les optiques 12, 13 et 15 sont correctement placées), et on supprime aussi toute variation de couleur sur les pixels de chacun des éléments 5 et 6 lorsque la position de l'observateur varie.

Ainsi, le dispositif de l'invention peut être compact (modes de réalisation des figures 1 à 3), tout en ayant un taux de transmission optique élevé.

**Revendications**

1. Dispositif de visualisation en couleurs à optimisation des paramètres des images, en particulier par rapport à la vision humaine, caractérisé par le fait qu'il comporte, en cascade, un dispositif de commande de la luminance des images visualisées (2, 10-11), un dispositif de commande de la teinte de ces images (5), et un dispositif de commande de la saturation de ces images (6).

2. Dispositif selon la revendication 1, caractérisé par le fait que le dispositif de commande de la luminance des images visualisées est un tube cathodique (2).

3. Dispositif selon la revendication 2, caractérisé par le fait que le tube cathodique est du type à luminophores blancs.

4. Dispositif selon la revendication 1, caractérisé par le fait que le dispositif de commande de la luminance comporte une valve optique matricielle (8).

5. Dispositif selon la revendication 4, caractérisé par le fait que la valve optique est spectralement neutre.

6. Dispositif selon la revendication 4 ou 5, caractérisé par le fait que la valve optique est du type à cristaux liquides nématiques en hélice.

7. Dispositif selon la revendication 6, caractérisé par le fait que la valve optique est associée à un polariseur neutre (9).

8. Dispositif selon l'une des revendications 4 à 7, caractérisé par le fait que la valve est rétro-éclairée par une source (10) collimatée (11).

9. Dispositif selon la revendication 8, caractérisé par le fait que la source est une source de lumière blanche.

10. Dispositif selon l'une des revendications précédentes, caractérisé par le fait que les dispositifs de commande de la teinte et de la saturation des images comportent chacun une matrice à cristaux liquides (5, 6) à commande électrique à tension variable.

11. Dispositif selon la revendication 10, caractérisé par le fait qu'il comporte en outre un polariseur (4, 9) spectralement neutre.

12. Dispositif selon la revendication 10, caractérisé par le fait qu'il comporte en outre une troisième matrice à cristaux liquides (7) à taux de polarisation variable.

13. Dispositif selon l'une des revendications précédentes, caractérisé par le fait qu'il comporte au moins une optique de conjugaison (12, 13) associée aux dispositifs de commande de la teinte et de saturation.

14. Dispositif selon l'une des revendications précédentes, caractérisé par le fait qu'il comporte un écran translucide (14).

15. Dispositif selon la revendication 14, caractérisé par le fait que l'écran est associé à une optique de conjugaison (15).

FIG.1

FIG.2

FIG.3

FIG.4

Office européen
des brevets

# RAPPORT DE RECHERCHE EUROPEENNE

Numero de la demande

EP 94 40 1954

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | EP-A-0 541 128 (HITACHI LTD.)<br>* page 3, ligne 17 - ligne 20 *<br>* page 3, ligne 57 - page 4, ligne 7 *<br>* page 5, ligne 21 - ligne 24 *<br>* page 5, ligne 37 - ligne 42 *<br>* page 5, ligne 49 - ligne 51 *<br>* page 7, ligne 31 - ligne 44 *<br>* figure 9 * | 1,4,5,10 | H01J29/89<br>G02F1/13 |
| Y | | 2,3,6-9,11 | |
| Y | US-A-5 142 388 (WATANABE ET AL.)<br>* colonne 3, ligne 44 - ligne 62 *<br>* colonne 6, ligne 55 - ligne 65 * | 6 | |
| Y | PROCEEDINGS OF THE SID.,<br>vol.26, no.2, 1985, LOS ANGELES US<br>pages 157 - 161<br>P BOS ET AL. 'A full-color<br>field-sequential color display'<br>* le document en entier * | 2,3 | |
| Y | PROCEEDINGS OF THE SID.,<br>vol.27, no.4, 1986, LOS ANGELES US<br>pages 257 - 259<br>J POLLACK ET AL. 'Liquid-crystal color<br>shutter operation and applications'<br>* figure 2 * | 7,11 | DOMAINES TECHNIQUES RECHERCHES (Int.Cl.6)<br><br>H01J<br>G02F |
| Y | US-A-4 019 808 (SCHEFFER)<br>* colonne 4, ligne 4 - ligne 46 *<br>* colonne 5, ligne 62 - colonne 6, ligne 9<br>*<br>* figures * | 8,9 | |

Le présent rapport a été établi pour toutes les revendications

| Lieu de la recherche | Date d'achèvement de la recherche | Examinateur |
|---|---|---|
| LA HAYE | 12 Décembre 1994 | Colvin, G |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)